# EUROPEAN PATENT APPLICATION

(11) **EP 1 517 467 A1**
(43) Date of publication of application: **23.03.2005**
(21) Application number: 02741296.4
(22) Date of filing: 25.06.2002
(51) Int. Cl.: H04L 1/00

(54) **RADIO BASE STATION APPARATUS**

(71) Applicant: MITSUBISHI DENKI KABUSHIKI KAISHA, Tokyo 100-8310 (JP)
(72) Inventor: KIYOMOTO, Kazuhiko, MITSUBISHI DENKI K.K., Tokyo 100-8310 (JP); KOMAWAKI, Kouichi, MITSUBISHI DENKI K.K., Tokyo 100-8310 (JP); ITOMITSU, Fujio, MITSUBISHI DENKI K.K., Tokyo 100-8310 (JP)
(74) Representative: Sajda, Wolf E., Dipl.-Phys.
(86) International application number: PCT/JP2002/006362
(87) International publication number: WO 2004/002045

(57) **Abstract**

At the time of modulating transmission data, a radio transmitting and receiving part TRX (35) error-checks the transmission data and outputs the result of the error check, whereas a base band signal processing part BB (36) error-checks received data output from TRX (35) and makes a health check based on the result of the error check of the received data and the result of error check output from TRX (35)

## Description

### TECHNICAL FIELD

The present invention relates to a CDMA (Code Division Multiple Access) radio station apparatus of the type that makes a health check of signals that are exchanged between a base band signal processing part and a radio transmitting and receiving part.

### BACKGROUND ART

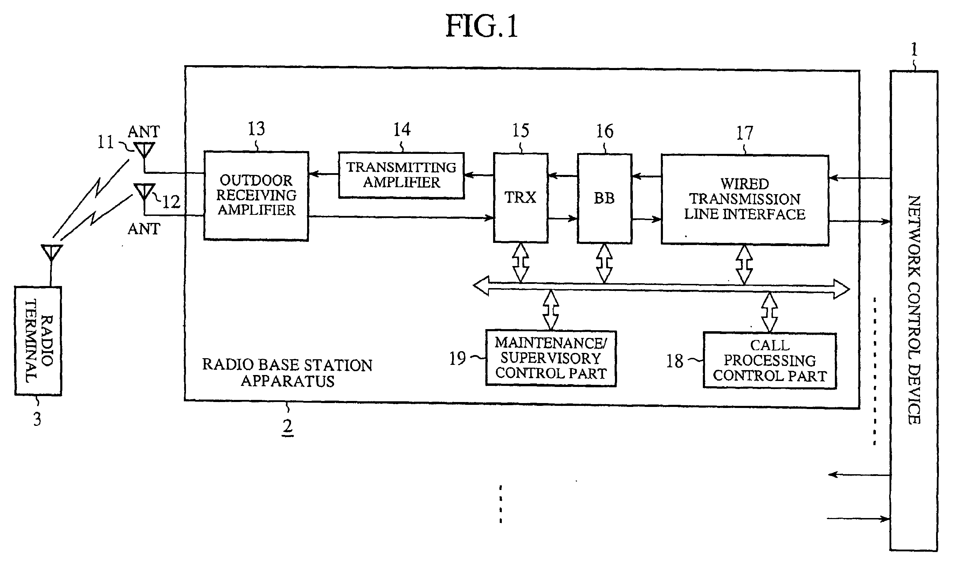

Fig. 1 is a block diagram showing a conventional radio station apparatus. Reference numeral 1 denotes a network control device connected via a wired transmission line to a plurality of radio base station apparatuses 2 to control them; 2 denotes the radio base station apparatus that sends transmission data output from the network control device 1 to a radio terminal 3, and also sends received data output from the radio terminal 3 to the network control device 1; and 3 denotes the radio terminal.

Reference numerals 11 and 12 denote a pair of antennas that perform transmission diversity and diversity reception; 13 denotes an outdoor receiving amplifier that amplifies a modulated signal, which is a radio signal received by each of the antennas 11 and 12, and outputs the thus amplified modulated signal to a radio transmitting and receiving part 15; and 14 denotes a transmitting amplifier that amplifies a modified signal, which is a radio signal from the radio transmitting and receiving part 15, and outputs the thus amplified modified signal to each of the antennas 11 and 12.

Reference numeral 15 denotes a radio transmitting and receiving part (hereinafter referred to as TRX: Transmitter and Receiver) which, on the one hand, modulates transmission data spectrum-spread by a base band signal processing part 16 and outputs the thus modulated signal to the transmitting amplifier 14 and, on the other hand, demodulates the modulated signal from the outdoor receiving amplifier 13 and outputs received data, which is the demodulated signal, to the base band signal processing part 16; and 16 denotes the base band signal processing part (hereinafter referred to as BB: Base Band signal Processor) which, on the one hand, spectrum-spreads transmission data from a wired transmission line interface part 17 and outputs it to TRX 15 and, on the other hand, spectrum-despreads the received data output from TRX 15 and outputs it to the transmission line interface part 17.

Reference numeral 17 denotes the wired transmission line interface part that outputs transmission data from the network control device 1 to BB 16 and outputs the received data from BB 16 to the network control device 1; 18 denotes a call processing control part that exchanges a call processing control signal with the network control device 1 and responds to the call processing control signal to specify a carrier frequency for modulating transmission data; and 19 denotes a maintenance/supervisory control part that exchanges a maintenance/supervisory control signal with the network control device 1 and responds to the maintenance/supervisory control signal to perform maintenance or carries out a state change of the radio base station apparatus 2.

Next, the operation of the prior art example.

A description will be given first as to the operation by which the radio base station apparatus 2 sends the transmission data output from the network control device 1 to the radio terminal 3.

The wired transmission line interface part 17 of the radio station apparatus 2 reads the transmission data provided from the network control device 1 onto the wired transmission line, and provides the transmission data to BB 16.

On receiving the transmission data from the wired transmission line interface part 17, BB 16 of the radio base station apparatus 2 performs error correction coding and framing of the transmission data, then separates the transmission data into I and Q components orthogonal in phase to each other, then spectrum-spreads their signal sequences (I, Q), and outputs them to TRX 15.

At this time, BB 16 receives from the call processing control part 18 a frequency notification signal (a signal indicating any one of four carriers fA, fB, fC and fD) indicating a carrier frequency for modifying the signal sequences (I, Q), and outputs the frequency notification signal to the transmitting amplifier 14.

When supplied with the spectrum-spread signal sequences (I, Q) and the frequency notification signal from BB 16, TRX 15 of the radio base station apparatus 2 performs orthogonal modulation of the signal sequences (I, Q) with the carrier frequency indicated by the frequency notification signal, and outputs the modulated signal to the transmitting amplifier 14.

Incidentally, TRX 15 error-checks the spectrum-spread signal sequences (I, Q) received from BB 16.

The transmitting amplifier 14 of the radio base station apparatus 2 amplifies the modulated signal from TRX 15, and applies the thus amplified modulated signal to the antennas 11 and 12.

As a result, the modulated radio signal is sent from the antennas 11 and 12 to the radio terminal 3.

Next, a description will be given as to the operation by which the radio base station apparatus 2 receives a radio signal sent from the radio terminal 3 and provides the received data to the network control device 1.

Upon diversity-receiving a radio signal sent from the radio terminal 3 by each of the antennas 11 and 12, the outdoor receiving amplifier 13 of the radio base station apparatus 2 amplifies the modulated radio signal and provides the thus amplified modulated signal to TRX 15.

When supplied with the amplified modulated signal from the outdoor receiving amplifier 13, TRX 15 of the radio base station apparatus 2 performs synchronous detection of the I and Q components of the modulated signal, and provides baseband signals of the I and Q components to BB 16

Upon receiving the baseband signals of the I and Q components from TRX 15, BB 16 of the radio base station apparatus 2 spectrum-despreads the baseband signals of the I and Q components, then processes them for tip synchronization, error correction decoding, or maximum-ratio combining during diversity handover, and outputs the processed data as received data to the wired transmission line interface part 17.

Incidentally, BB 16 error-checks the baseband signals of the I and Q components.

When supplied with received data from BB 16, the wired transmission line interface part 17 provides the received data via the wired transmission line to the network control device 1.

Since the conventional radio base station apparatus has such a configuration as described above, the output signal from BB16 (a down-link signal) is error-checked by TRX 15 and the output signal TRX 15 (an up-link signal) is error-checked by BB16, but it is impossible to make a health check based on the results of error checks of the both output signals.

The present invention is intended to solve this problem, and has for its object to provide a radio base station apparatus capable of making a health check based on both of the results of error checks of the down-link signal and the up-link signal.

### DISCLOSURE OF THE INVENTION

The radio base station apparatus according to the present invention is configured so that at the time of modulating transmission data, radio transmitting and receiving means error-checks the transmission data and provides the result of the error check to spreading means, whereas the spreading means error-checks received data output from the radio transmitting and receiving means and makes a health check based on the result of the error check and the result of the error check output from the radio transmitting and receiving means.

This enables a health check to be made based on the result of an error check of a down-link signal and the result of an error check of an up-link signal.

A radio base station apparatus according to another aspect of the present invention is configured so that at the time of outputting transmission data to the radio transmitting and receiving means, the spreading means outputs a parity signal for the transmission data to the radio transmitting and receiving means, and that the radio transmitting and receiving means refers to the parity signal to error-check the transmission data.

This enables the error check to be made without complicating the device configuration.

A radio base station apparatus according to another aspect of the present invention is configured so that the spreading means outputs the parity signal for the transmission data to the radio transmitting and receiving means via a signal line for the transmission of a sync signal.

This permits simplification of the device configuration.

A radio base station apparatus according to another aspect of the present invention is configured so that at the time of outputting the received data to the spreading means, the radio transmitting and receiving means outputs a parity signal for the received data to the spreading means, and that the spreading means refers to the parity signal to error-check the received data.

This enables the error check to be made without complicating the device configuration.

A radio base station apparatus according to another aspect of the present invention is configured so that the radio transmitting and receiving means outputs the parity signal for the received data and the result of the error check of the received data to the spreading means via a signal line for the transmission of the received data.

This permits simplification of the device configuration.

### BRIEF DESCRIPTION OF THE DRAWINGS

Fig. 1 is a block diagram showing a conventional radio base station apparatus.
Fig. 2 is a block diagram illustrating a radio base station apparatus according to Embodiment 1 of the present invention.
Fig. 3 is a diagram showing the physical configuration of a radio base station apparatus 22.
Fig. 4 is an explanatory diagram depicting up/down signal transmission between BB 36 and TRX 35.
Fig. 5 is an explanatory diagram showing the data format of a down-link IQ bus in line ① and line ③ of Fig. 4.
Fig. 6 is an explanatory diagram showing the data format of an up-link IQ bus in line ④ of Fig. 4.
Fig. 7 is an explanatory diagram showing the timing for transmitting status bits P0 and P1 of the transmission line in Fig. 6.

### BEST MODE FOR CARRYING OUT THE INVENTION

A detailed description will be given below, with reference to the accompanying drawings, of the best mode for carrying out the present invention.

### EMBODIMENT 1

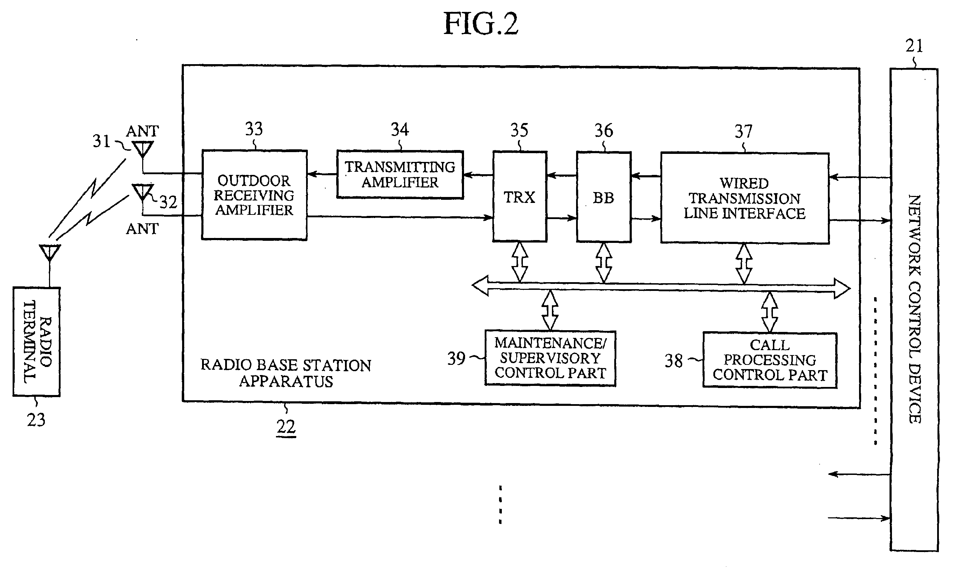

Fig. 2 is a block diagram illustrating a radio base station apparatus according to Embodiment 1 of the present invention. In Fig. 2, reference numeral 21 denotes a network control device (a wired network) connected via a wired transmission line to a plurality of radio base station apparatuses 22 to control them; 22 denotes the radio base station apparatus that sends transmission data output from the network control device 21 to a radio terminal 23, and also sends received data output from the radio terminal 23 to the network control device 21; and 23 denotes the radio terminal.

Reference numerals 31 and 32 denote a pair of antennas that perform transmission diversity and diversity reception; 33 denotes an outdoor receiving amplifier that amplifies a modulated signal, which is a radio signal received by each of the antenna 31 and 32, and outputs the thus amplified modulated signal to a radio transmitting and receiving part 35; and 34 denotes a transmitting amplifier that amplifies a modified signal, which is a radio signal from the radio transmitting and receiving part 35, and outputs the thus amplified modified signal to each of the antennas 31 and 32.

Reference numeral 35 denotes TRX (radio transmitting and receiving means) that is a radio transmitting and receiving part which, on the one hand, modulates transmission data spectrum-spread by BB 36 and outputs the thus modulated signal to the transmitting amplifier 34 and, on the other hand, demodulates the modulated signal from the outdoor receiving amplifier 33 and outputs received data, which is the demodulated signal, to BB 36; 36 denotes BB (spreading means) that is a base band signal processing part which, on the one hand, spectrum-spreads transmission data from a wired transmission line interface part 37 and outputs it to TRX 35 and, on the other hand, spectrum-despreads the received data output from TRX 35 and outputs it to the transmission line interface part 37; 37 denotes the wired transmission line interface part that outputs transmission data from the network control device 21 to BB 36 and outputs the received data from BB 36 to the network control device 21.

Reference numeral 38 denotes a call processing control part that exchanges a call processing control signal with the network control device 21 and responds to the call processing control signal to specify a carrier frequency for modulating transmission data; and 39 denotes a maintenance/supervisory control part that exchanges a maintenance/supervisory control signal with the network control device 21 and responds to the maintenance/supervisory control signal to perform maintenance or carries out a state change of the radio base station apparatus 22.

Next, the operation of this embodiment will be described.

A description will be given first as to the operation by which the radio base station apparatus 22 sends the transmission data output from the network control device 21 to the radio terminal 23.

The wired transmission line interface part 37 of the radio station apparatus 22 reads the transmission data provided from the network control device 21 onto the wired transmission line, and provides the transmission data to BB 36.

On receiving the transmission data from the wired transmission line interface part 37, BB 36 of the radio base station apparatus 22 performs error correction coding and framing of the transmission data, then separates the transmission data into I and Q components orthogonal in phase to each other, and then spectrum-spreads their signal sequences (I, Q), and outputs them to TRX 35.

At this time, BB 36 receives from the call processing control part 38 a frequency notification signal (a signal indicating any one of four carriers fA, fB, fC and fD) indicating a carrier frequency for modifying the signal sequences (I, Q), and outputs the frequency notification signal to TRX 35. Further, in order that TRX 35 may error-check the signal sequences (I, Q) that are down-link signals, a parity signal for the signal sequences (I, Q) is provided to TRX 35.

When supplied with the spectrum-spread signal sequences (I, Q) and the frequency notification signal and the parity signal from BB 36, TRX 35 of the radio base station apparatus 22 performs orthogonal modulation of the signal sequences (I, Q) with the carrier frequency indicated by the frequency notification signal, and outputs the modulated signal to the transmitting amplifier 34.

Based on the spectrum-spread signal sequences (I, Q) and the parity signal, TRX 35 error-checks the signal sequences (I, Q).

The transmitting amplifier 34 of the radio base station apparatus 22 amplifies the modulated signal received from TRX 15, and applies the amplified modulated signal to the antennas 31 and 32.

As a result, the modulated radio signal is sent from the antennas 31 and 32 to the radio terminal 23.

Next, a description will be given as to the operation by which the radio base station apparatus 22 receives a radio signal sent from the radio terminal 23 and provides the received data to the network control device 21.

Upon diversity-receiving a radio signal sent from the radio terminal 23 by each of the antennas 31 and 32, the outdoor receiving amplifier 33 of the radio base station apparatus 22 amplifies the modulated radio signal and provides the thus amplified modulated signal to TRX 35.

When supplied with the amplified modulated signal from the outdoor receiving amplifier 33, TRX 35 of the radio base station apparatus 22 performs synchronous detection of I and Q components of the modulated signal, and provides baseband signals of the I and Q components to BB 36.

At this time, TRX 35 supplies BB 36 with the result of the afore-mentioned error-checking of the down-link signal and parity signals for the baseband signals of the I and Q components that are up-link signals.

Upon receiving the baseband signals of the I and Q components, the result of the afore-mentioned error-checking of the down-link signal and parity signals for the baseband signals from TRX 35, BB 36 of the radio base station apparatus 22 spectrum-despreads the baseband signals of the I and Q components, then processes them for tip synchronization, error correction decoding, or maximum-ratio combining, and outputs the processed data as received data to the wired transmission line interface part 37.

Incidentally, based on the baseband signals of the I and Q components and the parity signal for the up-link signal, BB 36 error-checks the baseband signals.

Then, BB 36 makes a health check based on the results of error checks of the up-link signal and the down-link signal. For example, when the result of error check of the up-link signal is "normal" and the result of error check of the down-link signal is also "normal," it is decided that the radio base station apparatus 22 is normal, and at all other cases, it is decided as being abnormal.

The wired transmission line interface part 37 of the radio base station apparatus 22 provides the received data fed thereto from BB 36 to the network control device 21 via the wired transmission line.

As will be seen from the above, according to Embodiment 1, at the time of modulating the transmission data, TRX 35 also error-checks it and provides the result of the error check to BB 36, while at the same time BB 36 error-checks the received data from TRX 35 and makes a health check based on the result of the error check of the received data and the result of error check provided from TRX35; therefore, the health check can be made based on both of the results of the error checks of the down-link signal and the up-link signal.

### EMBODIMENT 2

While in Embodiment 1 has been described as to the case that BB36 outputs the parity signal for the signal sequences (I. Q) to TRX 35, it is also possible to provide the parity signal for the signal sequence (I, Q) to TRX 35 via a sync signal transmission line.

Furthermore, TRX 35 may also be configured to provide the result of the error check of the down-link signal and the parity signal for the base band signals of the I and Q components to BB 36 via a received data transmission line.

The above will be concretely described below.

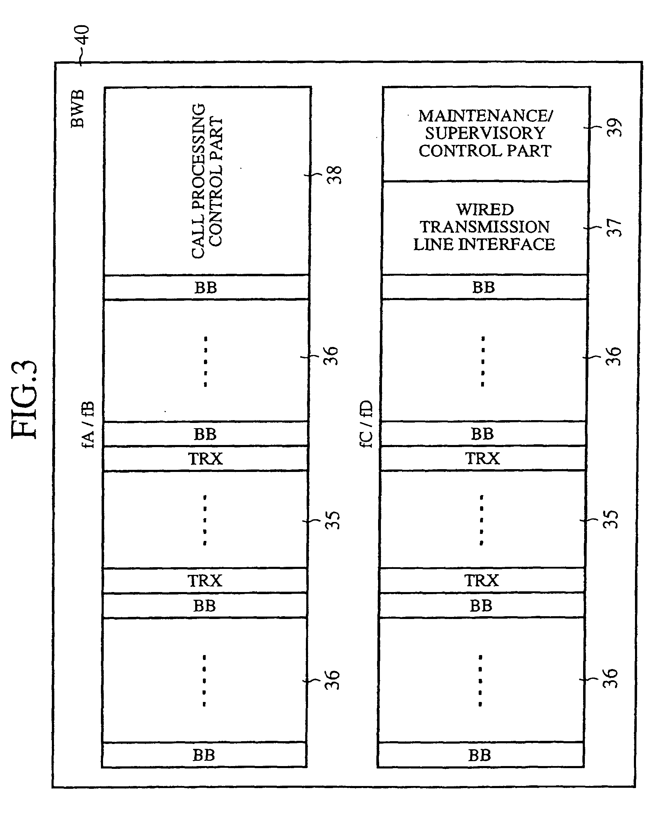

Fig. 3 is diagram showing the physical configuration of the radio base station apparatus 22 of Fig. 2.

TRXs 35, BBs 36, the wired transmission line interface part 37, the call processing control part 38 and the maintenance/supervisory control part 39 are each formed by a card-type printed-circuit board. In a casing of the radio base station apparatus 22 there are formed shelves for loading respective cards, whereas on the back of the casing there is mounted BWB (Backwired Board) 40 for interconnecting the cards loaded in the shelves.

TRX 35 on the upper shelf carries out orthogonal modulation with either one of carrier frequencies fA and fB, whereas TRX 35 on the lower shelf carries out orthogonal modulation with either one of carrier frequencies fC and fD. The BBs 36 on both of the upper and lower shelves are all compatible with any of the carrier frequencies (fA to fD); the carrier frequencies can dynamically be assigned to them by instructions from the call processing control part 38.

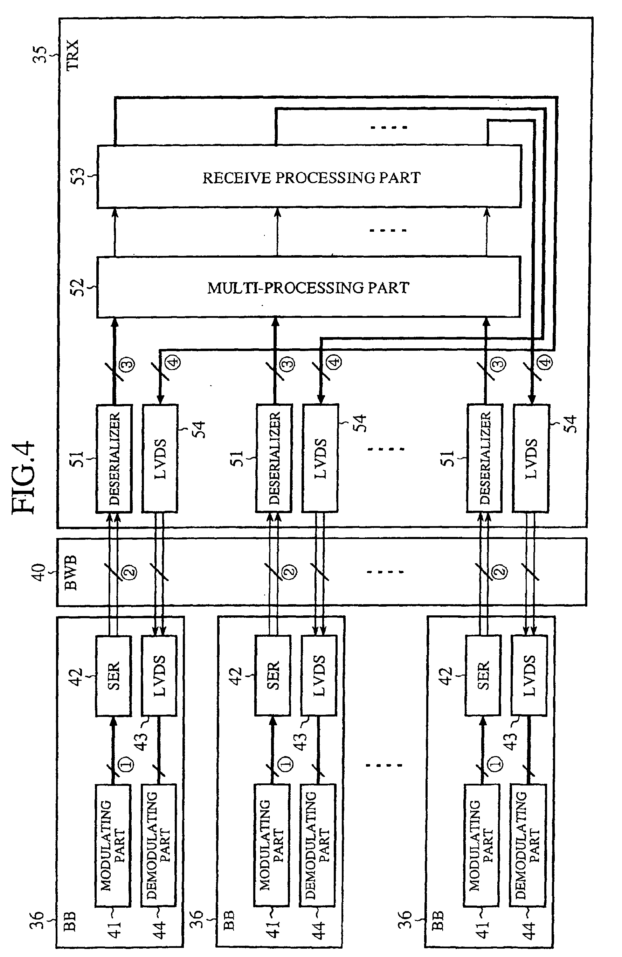

Fig. 4 is an explanatory diagram showing the up-link/down-link signal transmission between BBs 36 and TRX 35 in Fig. 2.

Each BB 36 is provided with a modulating part 41, SER (Serializer) 42, LVDS (Low Voltage Differential Signaling) 43, and a demodulating part 44; and TRX 35 is provided with a deserializer 51, a multi-processing part 52, a receive processing part 53, and LVDS 54.

In the down-link signal transmission, on the other hand, a signal subjected to spectrum spreading modulation in the modulating part 41 of BB 36 is sent with a 9-bit width to SER 42 and converted by SER 42 to serial data of a 1-bit (one differential pair) width. The serial data is transmitted via BWB 40 to the deserializer 51 of TRX 35. In the deserializer 51 the serial data is restored again to the signal of the 9-bit width; in the multi-processing part 52, signals (signals of 9-bit width) from all of the BBs 36 are multiplexed.

As described above, in the down-link signal transmission, the down-link signal from BB 36 to TRX 35 is converted by SER 42 to a signal of a small bit width for high-speed transmission via BWB 40―this reduces the transmission line width between BB 36 and TRX 35, enabling effective use of the wiring area.

In the up-link signal transmission, the radio signal from the radio terminal 23 is subjected to receive processing in the receive processing part 53 of TRX 35 and is converted by LVDS 54 to data of one differential pair. And, the data of the one differential pair is sent via BWB 40 and LVDS 43 to the demodulating part 44 of BB 36, wherein it is subject to spectrum despreading demodulation.

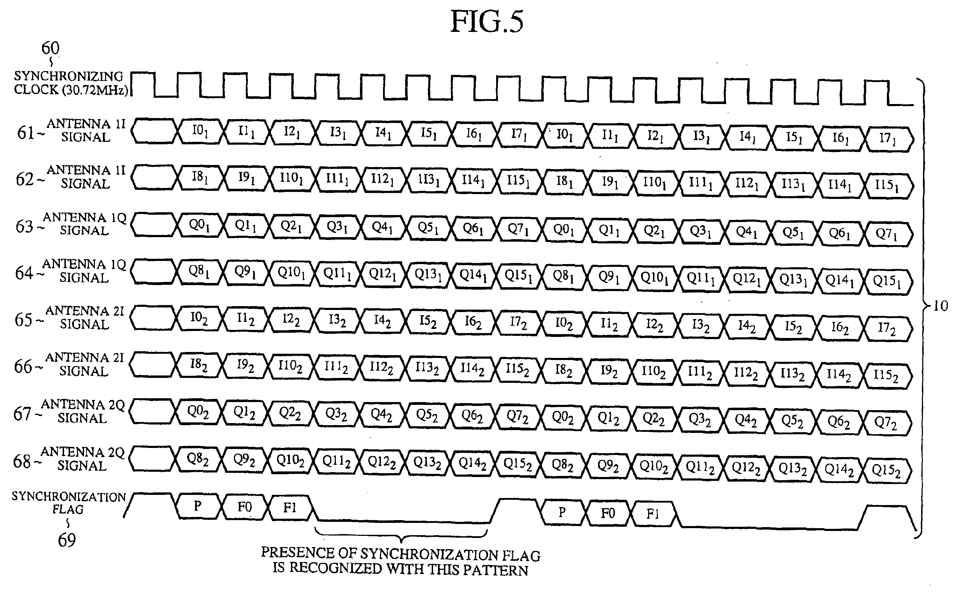

Fig. 5 is a diagram showing data formats of down-link IQ buses in transmission lines ① and ③ in Fig. 4.

First and second bus lines 61 and 62 are signal lines for transmitting an I-component signal to be sent from the antenna 31; the first and second bus lines 61 and 62 transmit a 16-bit signal. Similarly, third and fourth bus lines 63 and 64 are signal lines for transmitting a Q-component signal to be sent from the antenna 31; fifth and sixth bus lines 65 and 66 are signal lines for transmitting an I-component signal to be sent from the antenna 32; and seventh and eighth bus lines 67 and 68 are signal lines for transmitting a Q-component signal to be sent from the antenna 32.

A ninth bus line 69 is a signal line for transmitting a sync signal; in the first one bit is disposed a vertical even parity bit P (even parity of I0₁, I8₁, Q0₁, Q8₁, I0₂, I8₂, Q0₂, Q8₂) for making a health check of the down-link IQ bus; in the subsequent two bits are disposed carrier frequency notification bits (F0, F1); and in the last five bits are disposed synchronization flags. On a clock line 60 is provided a synchronizing clock that is transmitted in parallel to the first to ninth bus lines 61 to 69.

Since the parity signal is transmitted using the ninth bus line 69 for sync signal transmission as described above, a bus line for the parity signal need not be provided separately, and hence the device configuration can be simplified. Further, since the frequency notification signal is also transmitted using the ninth bus line 69 for sync signal transmission, a bus line for the frequency notification use need not be provided separately, either, and hence the device configuration can be further simplified.

Incidentally, the multi-processing part 52 of TRX 35 checks every down-link IQ bus in Fig. 4 for a transmission error based on the parity bit P. Since the input of the deserializer 51 is pulled up (an inverting terminal being pulled down) therein, when the transmission line ② in Fig. 4, which is the input of the deserializer, turn OPEN, levels of all signals on the transmission line ③ in Fig. 4, which is the output of the deserializer, go "H." At this time, since the I and Q signals and the synchronization flags on the first to ninth bus lines 61 to 69 all go "H," a break in the transmission line ② can also be detected by the above-mentioned parity check.

When BB 36 is not mounted, however, the I and Q signals and synchronization flags on the first to ninth bus lines 61 to 69 all go "H" as is the case of a break in the transmission line ②. Accordingly, in the case of detecting a break in the transmission line of the down-link IQ bus by TRX 35, TRX 35 calls for information about the mounting of BB 36, but by making provision to send transmission error information about the down-link IQ bus, that is, the result of its parity check, to BB 36 by use of the up-link IQ bus, it is possible to detect a break in the transmission line of the downlink IQ bus without the need for separately providing a bus line for sending the mounting information.

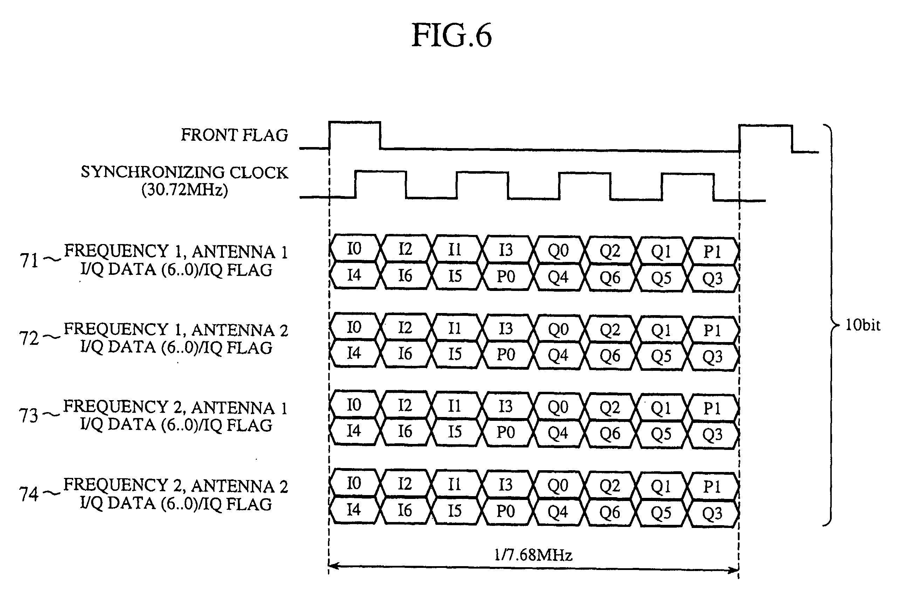

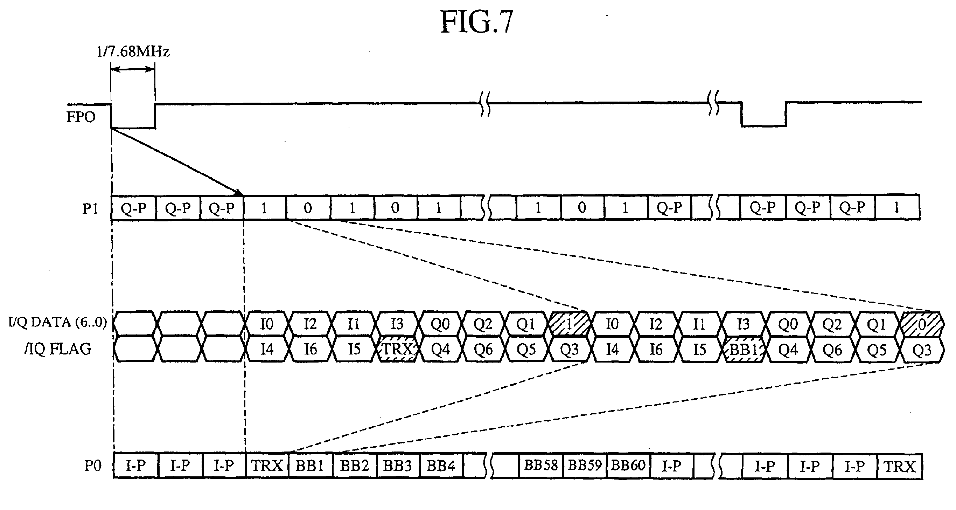

Fig. 6 is an explanatory diagram showing data formats of the up-link IQ bus in the transmission line ④ in Fig. 4, and Fig. 7 is an explanatory diagram showing the timing for transmission of the status bits P0 and P1 of the transmission line in Fig. 6.

The multi-processing part 52 of TRX 35 sends the result of the parity check of the down-link IQ bus via the receive processing part 53 to the demodulating part 44 of each BB 36 at the predetermined timing shown in Fig. 7 by use of the P0 bit that is an empty bit of each of first to fourth bus lines 71 to 73. And the demodulating part 44 of each BB 36 refers to the result of the parity check of the down-link IQ bus stored in the P0 bit to determine if the down-link IQ bus is in the state of break or not.

In Fig. 7, "TRX" is a status bit of TRX 35, which is a check bit indicating whether TRX 35 functions normally or not. "BB1" to "BB60" are bits each indicating the result of the parity check of down-link IQ bus data of each BB 36. And repetition data "101010 ..." is put on the P1 bit to enable the demodulating part 44 of each BB 36 to make a check to see if the up-link bus functions normally.

From synchronization next to "BB60" in the P0 bit, an even parity bit (I-P) of each I data on the up-link IQ bus is sent to the demodulating part 44 of each BB 36. Moreover, from synchronization next to "010101 ..." in the P1 bit an even parity bit (Q-P) of each Q data is sent to the demodulating part 44 of each BB 36.

The demodulating part 44 of each BB 36 checks a transmission error of the up-link IQ bus based on the even parity bits (I-P) and (Q-P).

### INDUSTRIAL APPLICABILITY

As described above, the radio base station apparatus according to the present invention makes a health check of a signal between the base band signal processing part and the radio transmitting and receiving part at the time of transmitting transmission data from the wired network to the radio terminal and outputting therefrom the received data to the wired network.

## Claims

1. A radio base station apparatus provided with: spreading means which, on the one hand, spectrum-spreads transmission data output from a wired network and outputs the transmission data and, on the other hand, spectrum-despreads received data and outputs the received data to said wired network; and radio transmitting and receiving means which, on the one hand, modulates the transmission data spectrum-spread by said spreading means and sends the modulated signal via an antenna and, on the other hand, demodulates a modulated signal received by said antenna and outputs the demodulated received data to said spreading means;
**characterized in that**: at the time of modulating the transmission data, said radio transmitting and receiving means error-checks the transmission data and provides the result of the error check to said spreading means; and said spreading means error-checks the received data output from said radio transmitting and receiving means and makes a health check based on the result of the error check and the result of the error check output from said radio transmitting and receiving means.

2. The radio base station apparatus as claimed in claim 1,
**characterized in that** at the time of outputting transmission data to said radio transmitting and receiving means, said spreading means outputs a parity signal for said transmission data to said radio transmitting and receiving means, and said radio transmitting and receiving means refers to said parity signal to error-check said transmission data.

3. The radio base station apparatus as claimed in claim 2,
**characterized in that** said spreading means outputs the parity signal for the transmission data to said radio transmitting and receiving means via a signal line for the transmission of a sync signal.

4. The radio base station apparatus as claimed in claim 1,
**characterized in that** at the time of outputting said received data to said spreading means, said radio transmitting and receiving means outputs a parity signal for said received data to said spreading means, and said spreading means refers to said parity signal to error-check said received data.

5. The radio base station apparatus as claimed in claim 4,
**characterized in that** said radio transmitting and receiving means outputs the parity signal for said received data and the result of the error check of said received data to said spreading means via a signal line for the transmission of said received data.
